# EUROPEAN PATENT APPLICATION

(11) **EP 4 265 506 A1**
(43) Date of publication of application: **25.10.2023**
(21) Application number: 22189880.2
(22) Date of filing: 11.08.2022
(51) Int. Cl.: B62J 6/26, B62K 3/00, B62J 43/28, B62J 43/13

(54) **ELECTRICALLY POWERED KICKBOARD**

(30) Priority: 18.04.2022 KR 20220047590
(71) Applicant: LUL KOREA Co., Ltd., Dong-gu Daegu 41200 (KR)
(72) Inventor: KIM, Hong Sick, 42117 Daegu (KR)
(74) Representative: ABG Intellectual Property Law, S.L.

(57) **Abstract**

The present invention relates to an electrically powered kickboard, and more particularly, to an electrically powered kickboard with a detachable battery.

The present invention discloses an electrically powered kickboard including: a body unit in which a battery is mounted in a detachable manner; a steering unit disposed on a front end of the body unit to adjust a traveling direction of the body unit; a front wheel unit disposed on a lower end of the steering wheel unit; a rear wheel unit disposed on a rear end of the body unit; and a driving unit installed on at least one of the front wheel unit and the rear wheel unit and configured to drive at least one of the front wheel unit and the rear wheel unit to rotate through an electric power supplied from the battery.

## Description

### CROSS-REFERENCE TO RELATED APPLICATIONS

This patent application claims priority of Korean Patent Application No. 10-2022-0047590, filed on April 18, 2022, the entire contents of which are hereby incorporated by reference.

### FIELD OF THE INVENTION

The present invention disclosed herein relates to an electrically powered kickboard, and more particularly, to an electrically powered kickboard with a detachable battery.

### BACKGROUND ART

In general, a non-powered kickboard includes a footrest, front and rear wheels installed at a front portion and a rear portion of the footrest, respectively, and a steering unit for steering the front wheel. The non-powered kickboard travels forward by putting one foot on the footrest and kicking the other foot. The non-powered kickboard is generally used for a hobby and a leisure activity.

The non-powered kickboard has a limitation in that a user consumes much physical strength during traveling, and a traveling is difficult in case of an uphill road. Thus, in recent years, an electrically powered kickboard including an electric motor at a front wheel or a rear wheel is widely used for a short-distance transportation device.

As the electrically powered kickboard is widely distributed, a usage of the electrically powered kickboard is diversified into commuting to work, commuting to school, and a transportation device for a designated driver. Thus, the electrically powered kickboard is developed from a short-distance transportation device to a transportation device traveling at a high speed with a wider range.

Accordingly, although the electrically powered kickboard requires a high traveling distance and a high traveling speed, the electrically powered kickboard has a limitation in that a performance of a battery provided in the electrically powered kickboard having a limited size is not improved.

Furthermore, although the number of charging of the battery increases as the number of usage of the electrically powered kickboard increases, the charging has a space limitation because the electrically powered kickboard necessarily moves to a power supply position for battery charging.

Also, although a LED lamp is attached to a typical electrically powered kickboard for safety during night driving, a plurality of LED lamps are required for direction indicating and recognition of the entire electrically powered kickboard to cause cost increase and appearance degradation.

### SUMMARY OF THE INVENTION

To solve the above-mentioned limitations, the present invention provides an electrically powered kickboard that is easily charged with a detachable battery.

In accordance with an embodiment of the present invention, an electrically powered kickboard includes: a body unit 200 which provides a support surface 211 on which a user rides and in which a battery 100 is mounted in a detachable manner; a steering unit 300 disposed on a front end of the body unit 200 to adjust a traveling direction of the body unit 200; a front wheel unit 400 disposed on a lower end of the steering wheel unit 300; a rear wheel unit 500 disposed on a rear end of the body unit 200; and a driving unit installed on at least one of the front wheel unit 400 and the rear wheel unit 500 and configured to drive at least one of the front wheel unit 400 and the rear wheel unit 500 to rotate through an electric power supplied from the battery 100.

The body unit 200 may include: a body 210 having an inner space S and including an opening defined as at least a portion of an upper portion of the body 210 is opened; and a support footrest 220 configured to open and close the opening of the body 210 and support the user to ride on the kickboard.

The support footrest 220 may be coupled to one end of a top surface of the body 210 through a hinge and open and close the upper opening of the body 210 through a hinge-rotation.

The support footrest 220 may include a locking portion 222 that is interfered with or released from a portion of the body 210 through a rotation to open and close the upper opening.

The battery 100 may include: a battery part 110 configured to generate electricity by using chemical energy; and a battery locking part 120 disposed on one end of the battery part 110 and locked with the body unit 200.

The body unit 200 may further include a battery frame 230 in the inner space S, to which the battery 100 is inserted, and the battery 100 may be inserted and locked to the battery frame 230.

The battery frame 230 may include an interference part that is interfered with the battery locking part 120 through a linear movement to lock the battery 100.

The body unit 200 may further include a storage frame 240 configured to store an extra battery 100 in the inner space S.

The electrically powered kickboard may further include a lighting unit 600 disposed on a side surface of the body unit 200 to emit light in at least one direction of a forward direction, a rearward direction, and a sideward direction based on the body unit 200.

The lighting unit 600 may include: a lighting tube 620 disposed on the side surface of the body unit 200; and a LED light source 610 disposed in the lighting tube 620 to emit light toward the lighting tube 620.

### BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain principles of the present invention. In the drawings:
FIG. 1 is a perspective view illustrating an electrically powered kickboard according to the present invention;

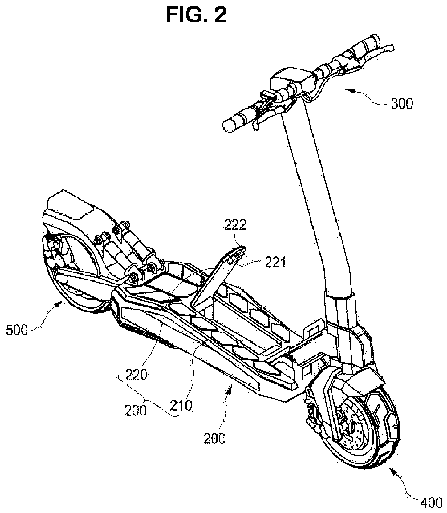

FIG. 2 is a perspective view illustrating a state, in which a footrest is opened, of the electrically powered kickboard of FIG. 1;

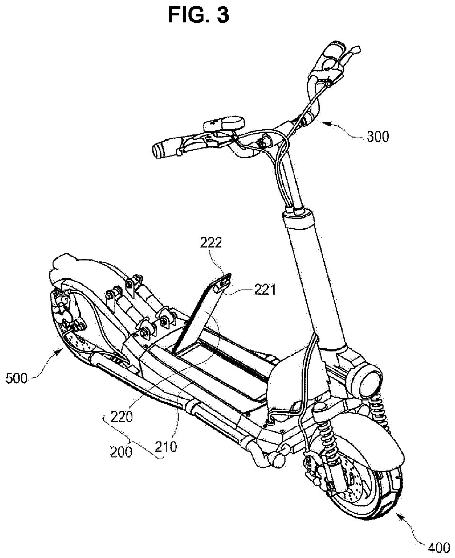

FIG. 3 is a plan view illustrating a battery mounted or detached portion of the electrically powered kickboard of FIG. 1;

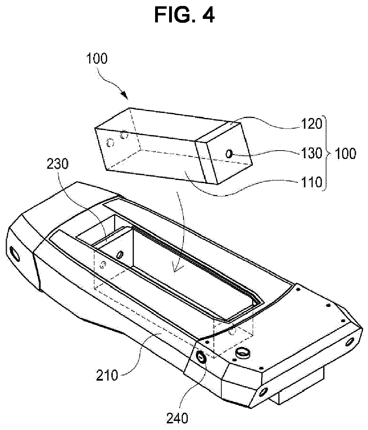

FIG. 4 is a plan view illustrating another embodiment of the battery mounted or detached portion of the electrically powered kickboard of FIG. 1;

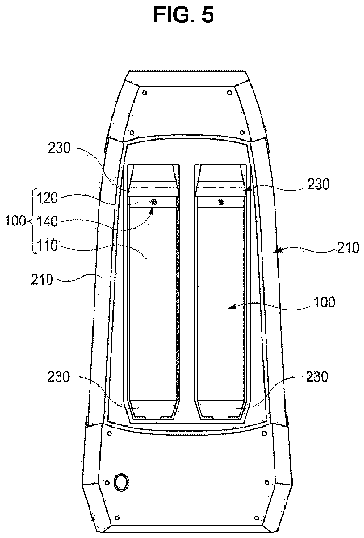

FIG. 5 is a plan view illustrating another embodiment of the battery mounted or detached portion of the electrically powered kickboard of FIG. 1;
FIG. 6 is a plan view illustrating a lighting part of the electrically powered kickboard of FIG 1;

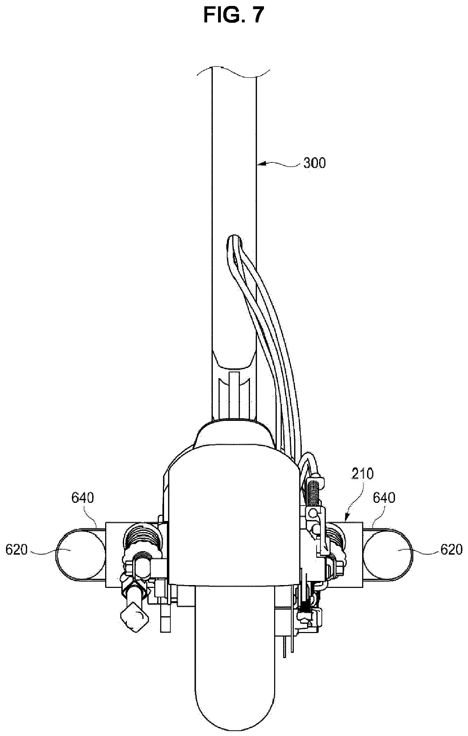

FIG. 7 is a rear view illustrating the lighting part of the electrically powered kickboard of FIG 1;
FIGS. 8A and 8B are views illustrating a state before and after locking through a lock part of the electrically powered kickboard of FIG. 1;
FIG. 9 is a perspective view illustrating another embodiment of the electrically powered kickboard according to the present invention; and
FIG. 10 is a cross-sectional view illustrating the electrically powered kickboard of FIG. 9.

### DETAILED DESCRIPTION OF THE PREFERRED EMBODIMENTS

Hereinafter, an electrically powered kickboard according to the present invention will be described with reference to the accompanying drawings as stated below.

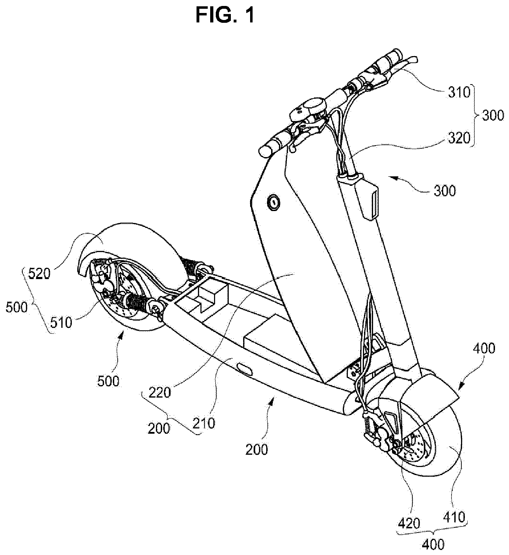

As illustrated in FIG. 1, the electrically powered kickboard according to the present invention includes: body unit 200 which provides a support surface 211 on which a user rides and in which a battery 100 is mounted in a detachable manner; a steering unit 300 disposed on a front end of the body unit 200 to adjust a traveling direction of the body unit 200; a front wheel unit 400 disposed on a lower end of the steering wheel unit 300; a rear wheel unit 500 disposed on a rear end of the body unit 200; and a driving unit installed on at least one of the front wheel unit 400 and the rear wheel unit 500 and allowing at least one of the front wheel unit 400 and the rear wheel unit 500 to rotate through an electric power supplied from the battery 100.

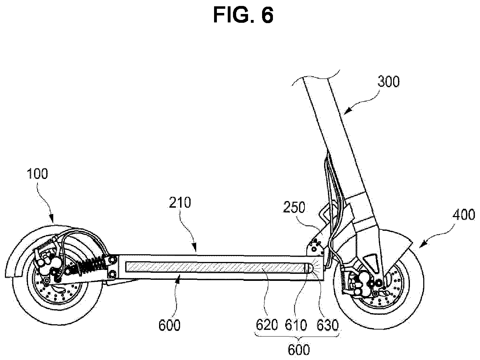

Also, as illustrated in FIG. 6, the electrically powered kickboard according to the present invention may include a lighting unit 600 disposed on a side surface of the body unit 200 and emitting light in at least one direction of a forward direction, a backward direction, and a sideward direction based on the body unit 200.

Here, the battery 100 that provides an electric power for driving the driving unit that will be described later may have various configurations.

For example, the battery 100 that is a portable secondary battery may supply an electric power to the driving unit through being transported and then mounted according to necessity of the user.

Also, the battery 100 may have a shape that is mounted to and detached from an inner space of the body unit 200 so that the battery 100 is repeatedly used after being separated from the body unit 200 and charged when transportation or charging is required.

That is, since the battery 100 is portable and has the shape that is mounted to and detached from the inner space of the body unit 200, the electrically powered kickboard may have a significantly increased traveling distance by including an extra battery 100.

Also, since the battery 100 is portable, inconvenience of moving the entire electrically powered kickboard for charging may be reduced, and a space efficiency may be maximized.

For example, the battery 100 may include a battery part 110 that generates electricity by using chemical energy and a battery locking part 120 disposed on an end of the battery part 110 and locked with the body unit 200.

The battery locking part 120 that is disposed on the end of the battery part 110 and locked with the body unit 200 may have various configurations.

For example, the battery locking part 120 may be disposed on the end of the battery part 110 and implement or release interference with a battery frame 230 of the body unit 200 that will be described later to couple and then lock the battery 100 to the body unit 200.

Here, the battery locking part 120 may transmit an electric power between the battery part 110 and the battery frame 230 that will be described later through a conductor passing through the battery part 110.

Here, an interference groove 130 may be defined the battery locking part 120 so that interference with the battery frame 230 that will be described later is implemented or released.

As the interference is implemented or released according to a linear movement of a protruding rod (not shown) protruding to linearly move from the battery frame 230, the interference groove 130 may couple or separate the battery 100 to or from the body unit 200.

For another example, the battery locking part 120 may include a separate battery locking part 140 that is interfered with or released from a groove defined in the battery frame 230 to couple or separate the battery 100 to or from the battery frame 230.

The battery locking part 140 may include a rod that performs a linear movement or a rotational movement in a state in which the battery 100 is seated on the battery frame 230 to couple or separate the battery 100 to or from the battery frame 230 through protrusion caused by the linear movement or interference caused by the rotational movement.

In this case, the battery locking part 140 may implement or release interference through a separate key and be coupled to or separated from the battery frame 230 by allowing the rod to perform the linear or rotational movement through entering a password

The body unit 200 which provides the support surface 211 on which the user rides and in which the battery 100 is mounted in a detachable manner may have various configurations.

For example, the body unit 200 may include a body 210 having an inner space S and including an opening that is defined as at least a portion of an upper portion of the body 210 is opened and a support footrest 220 that opens and closes the opening of the body 210 and supports the user to ride on the kickboard.

Also, the body unit 200 may further include the battery frame 230 allowing the battery 100 to be inserted into the inner space S.

Also, the body unit 200 may further include a storage frame 240 for storing the extra battery 100 in the inner space S.

The body 210 including the opening that is defined as at least a portion of the upper portion of the body 210 is opened and forms the inner space S may have various configurations.

For example, the body 210 may be a body for a typical electrically powered kickboard, and the battery 100 and a component that is electrically connected with the battery for supplying an electric power to the front wheel unit 400 and the rear wheel unit 500, which will be described later, may be installed in the body 210.

That is, the body 210 may support the user riding thereon and form the inner space S to supply the electric power through the battery 100 disposed in the inner space S.

Here, the body 210 in which the opening is defined as at least a portion of the upper portion of the body 210 is opened may be opened and closed through the support footrest 220 that will be described later, so that the user easily accesses the inner space S.

In this case, the body 210 may have the upper portion at least a portion of which is opened. In another case, the body 210 may a shape in which an entire top surface thereof is opened.

In the both cases, the opening of the body 210 may be opened and closed through the support footrest 220 that will be described later.

The support footrest 220 that opens and closes the opening and allows the user to ride thereon may have various configurations.

For example, the support footrest 220 may be coupled to one end of a top surface of the body 210 through a hinge and open and close the upper opening of the body 210 through hinge-rotation.

Thus, the user may open and close the support footrest 220 through opening and closing of the battery 100 disposed in the inner space S in a detachable manner.

The support footrest 220 may open and close the opening through locking or unlocking with the body 210. To this end, the support footrest 220 may include a locking block 221 and a locking portion 222, which open and close the upper opening of the body 210.

Here, the support footrest 220 may implement or release interference with the body 210 through linear movement to protrude from the locking block 221 or through a rotating locking portion 222.

In this process, the interference may be implemented or released by using a method of using a key or using a password like the above-described mounting or detaching of the battery 100.

The battery frame 230 that allows the battery 100 to be inserted into the inner space S may have various configurations.

For example, the battery frame 230 having a size corresponding to that of the battery 100 so that the battery 100 is mounted to or detached from the inner space S may be interfered with or released from the battery locking part 120 to lock the battery 100.

To this end, the battery frame 230 may include an interference part that implements interference with the battery locking part 120 through linear movement to lock the battery 100.

That is, the battery frame 230 may include an interference part that protrudes or retreats through linear movement to implement or release interference with the battery locking part 120, thereby locking the battery 100.

The storage frame 240 for storing the extra battery 100 in the inner space S may have various configurations.

For example, the storage frame 240 may have the same shape as the battery frame 230 to store the extra battery 100 in the inner space S.

Particularly, the storage frame 240 may allow the battery 100 to be inserted thereto, thereby stably storing the battery 100. In this process, the storage frame 240 may lock and store the battery 100 like the battery frame 230.

Also, the body unit 200 may further include a connection part 250 connected with the steering unit 300 that will be described later and hinge-rotating so that the steering unit 300 is folded toward the body unit 200.

The connection part 250 may have one end coupled to the steering unit 300 and the other end coupled to a front portion of the body 210, and connect the body 210 with the steering unit 300.

Here, the connection part 250 may hinge-rotate so that the steering unit 300 is folded toward the body 210.

The steering unit 300 that is disposed at a front end of the body unit 200 to adjust a traveling direction of the body unit 200 may have various configurations.

For example, the steering unit 300 may be coupled to the front end of the body unit 200 through the body 210 and the connection part 250 and have a typically disclosed shape.

The front wheel unit 400 that is disposed at a lower end of the steering unit 300 may have various configurations.

For example, the front wheel unit 400 may include a front wheel 410 coupled to a frame extending downward from the steering unit 300 and a disc 420 coupled with the front wheel 410 on the same shaft.

Also, the front wheel unit 400 may further include a lock part 430 that is interfered with or released from the disc 420 to lock the front wheel 410

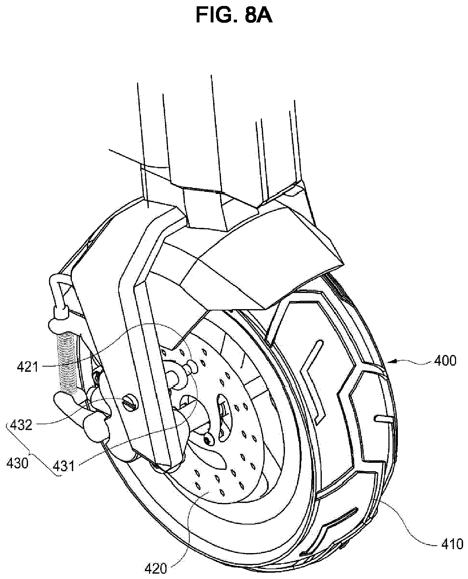

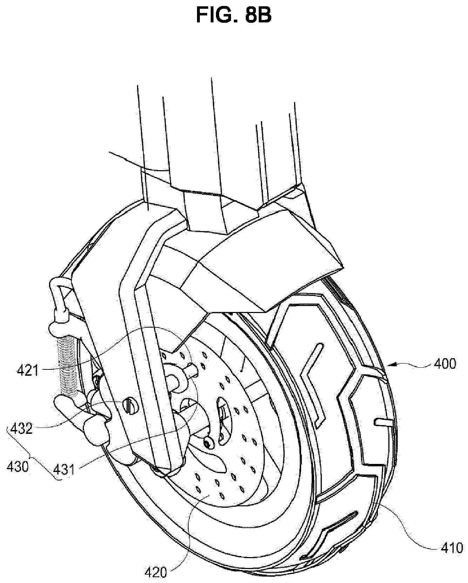

More particularly, as illustrated in FIGS. 8A and 8B, the front wheel 410 may be installed on the frame extending downward from the steering unit 300 through a coupling shaft.

Here, the disc 420 may be disposed outside the front wheel 410 on the same coupling shaft, and a plurality of disc holes 421 for heat dissipation may be defined in the disc 420.

Also, as the disc 420 is coupled on the same shaft as the front wheel 410, rotations of the front wheel 410 and the disc 420 may be synchronized.

The lock part 430 that is installed on the frame extending downward from the steering unit 300 and locks the front wheel 410 according to interference with or release from the disc 420 may have various configurations.

For example, the lock part 430 may include a lock protruding portion 431 that linearly protrudes and retreats and a manipulation portion that allows the lock protruding portion 431 to linearly protrude or retreat through a rotation.

Here, the lock protruding portion 431 may protrude to pass through at least one disc hole 421 of the disc 420 and be interfered with the disc 420 to prevent the rotations of the disc 420 and the front wheel 410.

The lock protruding portion 431 may be interfered with or released from the disc hole 421 defined in the disc 420 and interfered with a locking hole separately defined in the disc 420 or an opening defined in the disc 420 to prevent the disc 420 and the front wheel 410 from rotating and lock the disc 420 and the front wheel 410.

The manipulation portion 432 that allows the lock protruding portion 431 to protrude or retreat through a rotation may rotate around an eccentric shaft and push the lock protruding portion 431 to protrude or allow the lock protruding portion 431 to retreat through an elastic force thereof.

Here, the manipulation portion 432 may be operated by various methods such as a method of rotating through a key or a method of rotating through a password.

The rear wheel unit 500 that is disposed at a rear end of the body unit 200 may have various configurations.

For example, the rear wheel unit 500 may include a rear wheel frame 520 coupled to a rear portion of the body unit 200 and a rear wheel 510 disposed below the rear wheel frame 510 like the front wheel unit 400.

Here, like the front wheel unit 400, the disc 420 may be installed to the rear wheel unit 500, and the above-described lock part 430 may be applied to the rear wheel unit 500 in the same manner.

The driving unit that is disposed on at least one of the front wheel unit 400 and the rear wheel unit 500 and allows at least one of the front wheel unit 400 and the rear wheel unit 500 to rotate through an electric power supplied from the battery 100 may have various configurations.

For example, the driving part may be electrically connected with the battery 100 and installed on at least one of the front wheel unit 400 and the rear wheel unit 500 to rotate and provide the electric power.

The lighting unit 600 that is disposed on the side surface of the body unit 200 and emits light in at least one direction of a forward direction, a rearward direction, and a sideward direction based on the body unit 200 may have various configurations.

Here, the lighting unit 600 may be disposed on the side surface of the body unit 200 to emit light in the front direction, the rear direction, and the side direction of the body unit 200 and thus allow a passenger to recognize existence of the kickboard at night, thereby securing safety and improving beauty of an appearance of the kickboard.

Particularly, the lighting unit 600 may be disposed on the side surface of the body unit 200 to serve as a turn signal. More particularly, the lighting unit 600 may be configured appropriately to a left rotation, a right rotation, or sudden stop.

For example, the lighting unit 600 may include a lighting tube 620 disposed on the side surface of the body unit 200 and a LED light source 610 disposed in the lighting tube 620 to emit light toward the lighting tube 620.

Also, the lighting unit 600 may include a lens part 630 coupled to a front end of the lighting tube 620 and emitting light emitted from the LED light source 610 in a front direction thereof.

Also, the lighting unit 600 may further include a fixing part 640 surrounding the lighting tube 620 for fixing the lighting tube 620 to the side surface of the body unit 200.

The LED light source 610 that is installed in the lighting tube 620 to emit light toward the lighting tube 620 may be disposed at an inner front portion of the lighting tube 620 to emit light in both directions.

Here, the LED light source 610 may emit light with a predetermined frequency or change a pattern and a color of light according to preset control.

The lighting tube 620 that is disposed on each of the side surfaces of the body unit 200 may be installed in the LED light source 610 to emit light emitted from the LED light source 610.

In this case, the lighting tube 620 that is made of transparent acrylic may refract and emit light emitted from the LED light source 610 from the entire lighting tube 620. Thus, a sufficient quantity of light may be obtained even from one LED light source 610.

Also, the lighting tube 620 may emit the same light in the front and rear directions as that emitted from the side surface. Through this, a turn signal may be recognized through lighting even at the rear side.

The lens part 630 that is coupled to the front end of the lighting tube 620 and emits light emitted from the LED light source 610 in the front direction may have various configurations.

For example, the lens part 630 may be coupled to the front end of the lighting tube 620 and emit light in a wide range in the front direction in addition to light emitted through the lighting tube 620.

Thus, the lens part 630 may allow the user to drive while checking a front side at night and in dark areas without a separate front lighting, thereby improving safety.

The fixing part 640 that surrounds the lighting tube 620 for fixing the lighting tube 620 to the side surface of the body unit 200 may be coupled so that both ends of the body unit 200 surround the lighting tube 620 and allow the lighting tube 620 to be stably installed.

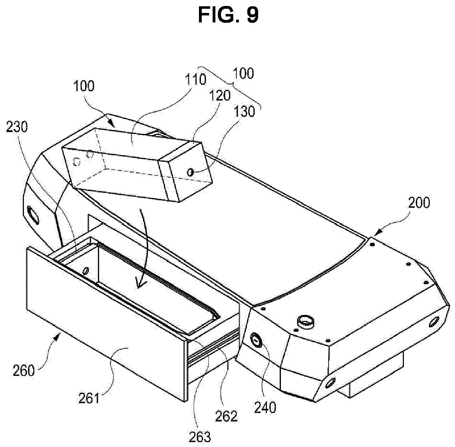

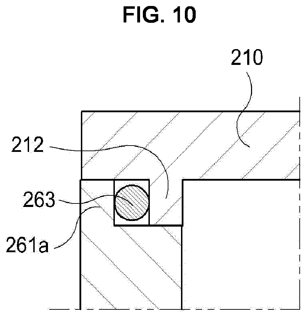

In another embodiment, as illustrated in FIGS. 9 and 10, the body unit 200 may include a body 210 having an inner space S and a side opening defined as at least a portion of a side surface of the body 210 is opened and a side door 260 that opens and closes the side opening of the body 210.

Here, the side door 260 that is slide-inserted to the body 210 in which the side opening is defined to open and close the side opening may have various configurations.

For example, the side door part 260 may include: a side door body including a battery frame 230 to which a battery 100 is inserted and inserted into the inner space S of the body 210; a side door 261 coupled to the side door body to close the side opening of the body 210, thereby forming a portion of a side surface of the body 210; and a rail 262 disposed on the side door body so that the side door body is slide-inserted into the body 210.

Also, the side door part 260 may further include a sealing member 263 coupled to a side door extension portion 261a extending from the side door body in the side door 261 and disposed between the body 210 and the side door extension portion 261a to seal the inner space S.

That is, the sealing member 263 may be disposed on at least a portion of an edge of a surface facing the body 210 of the side door 261 and disposed between a stepped portion 212 protruding from the body 210 toward the inner space S and the side door extension portion 261a to seal the inner space S when the side door part 260 is inserted into the body unit 200.

Also, the side door part 260 may include the rail 262 disposed on a side surface thereof to slide along a guide member disposed on an inner wall surface of the body 210.

Furthermore, the side door part 260 may include the battery frame 230 allowing the battery 100 to be inserted thereto and a conductor contacting a power supply at a position in which the side door part 260 is inserted into the inner space S so as to be connected with the power supply in a state in which the battery 100 is inserted.

That is, the side door part 260 may supply an electric power through contact by including a protruding conductive member that is disposed on a side surface of the side door part 260 and electrically connected with the battery frame 230 to which the battery 100 is inserted and a body conductive member for connecting the power supply to the inner wall surface of the body 210 at a position corresponding to the conductive member in a state in which the side door part 260 is inserted.

The electrically powered kickboard according to the present invention may be easily charged without the space limitation when charged by including the detachable battery for driving the electric motor for driving the electrically powered kickboard because only the battery is separated and charged instead of the entire electrically powered kickboard when charged.

Also, the electrically powered kickboard according to the present invention may have the significantly increased traveling distance even without the performance improvement of the battery by using the detachable battery and the portable extra battery.

Also, the electrically powered kickboard according to the present invention may prevent the risk of robbery while allowing relatively simple mounting and detachment of the battery by including the mounted or detached portion for mounting or detaching the battery in the double lock manner.

Also, the electrically powered kickboard according to the present invention may be compact and portable by including the detachable battery and the portable extra battery because the battery has the light weight and the small volume relatively to the typical battery even without the loss of the traveling distance of the electrically powered kickboard.

Also, the electrically powered kickboard according to the present invention may have the improved visibility and safety when driven at night by including the light source at the side surface thereof so as to emit the light and the turn signal for recognizing the entire electrically powered kickboard through even one LED light source.

Particularly, the electrically powered kickboard according to the present invention may have the reduced costs and be easily manufactured by providing one LED light source at each of the side surfaces.

Although the embodiments of the present invention have been described, it is understood that the present invention should not be limited to these embodiments but various changes and modifications can be made by one ordinary skilled in the art within the spirit and scope of the present invention as hereinafter claimed.

## Claims

1. An electrically powered kickboard comprising:
a body unit which provides a support surface on which a user rides and in which a battery is mounted in a detachable manner;
a steering unit disposed on a front end of the body unit to adjust a traveling direction of the body unit;
a front wheel unit disposed on a lower end of the steering wheel unit;
a rear wheel unit disposed on a rear end of the body unit; and
a driving unit installed on at least one of the front wheel unit and the rear wheel unit and configured to drive at least one of the front wheel unit and the rear wheel unit to rotate through an electric power supplied from the battery.

2. The electrically powered kickboard of claim 1, wherein the body unit comprise:
a body having an inner space and comprising an opening defined as at least a portion of an upper portion of the body is opened; and
a support footrest configured to open and close the opening of the body and support the user to ride on the kickboard.

3. The electrically powered kickboard of claim 2, wherein the support footrest is coupled to one end of a top surface of the body through a hinge and opens and closes the upper opening of the body through a hinge-rotation.

4. The electrically powered kickboard of claim 3, wherein the support footrest comprises a locking portion that is interfered with or released from a portion of the body through a rotation to open and close the upper opening.

5. The electrically powered kickboard of claim 2, wherein the battery comprises:
a battery part configured to generate electricity by using chemical energy; and
a battery locking part disposed on one end of the battery part and locked with the body unit.

6. The electrically powered kickboard of claim 5, wherein the body unit further comprises a battery frame in the inner space, to which the battery is inserted,
wherein the battery is inserted and locked to the battery frame.

7. The electrically powered kickboard of claim 6, wherein the battery frame comprises an interference part that is interfered with the battery locking part through a linear movement to lock the battery.

8. The electrically powered kickboard of claim 2, wherein the body unit further comprises a storage frame configured to store an extra battery in the inner space.

9. The electrically powered kickboard of claim 1, further comprising a lighting unit disposed on a side surface of the body unit to emit light in at least one direction of a forward direction, a rearward direction, and a sideward direction based on the body unit.

10. The electrically powered kickboard of claim 9, wherein the lighting unit comprises:
a lighting tube disposed on the side surface of the body unit; and
a LED light source disposed in the lighting tube to emit light toward the lighting tube.

11. The electrically powered kickboard of claim 1, wherein the body unit comprises:
a body having an inner space and comprising a side opening defined as at least a portion of a side surface of the body is opened; and
a side door part configured to open and close the side opening of the body.

12. The electrically powered kickboard of claim 11, wherein the side door part comprises:
a side door body comprising a battery frame to which the battery is inserted and inserted into the inner space of the body; and
a rail disposed on the side door body so that the side door body is slide-inserted into the body.
